# EUROPEAN PATENT APPLICATION

(11) **EP 2 940 985 A1**
(43) Date of publication of application: **04.11.2015**
(21) Application number: 13869165.4
(22) Date of filing: 12.12.2013
(51) Int. Cl.: H04N 5/232, G06F 3/0346, G06T 7/00, G06T 7/60

(54) **IMAGE PROCESSING DEVICE, AND IMAGE PROCESSING METHOD AND PROGRAM**

(30) Priority: 26.12.2012 JP 2012282612
(71) Applicant: Sony Corporation, Tokyo 108-0075 (JP)
(72) Inventor: OKUBO, Atsushi, Tokyo 108-0075 (JP); SHIMOMURA, Hideki, Tokyo 108-0075 (JP); AOYAMA, Kazumi, Tokyo 108-0075 (JP); SUTOU, Yasuhiro, Tokyo 108-0075 (JP); TANAKA, Akichika, Tokyo 108-0075 (JP)
(74) Representative: MFG Patentanwälte Meyer-Wildhagen Meggle-Freund Gerhard PartG mbB
(86) International application number: PCT/JP2013/083297
(87) International publication number: WO 2014/103732

(57) **Abstract**

Provided is an image processing device including an eye-gaze direction detection unit configured to detect an eye-gaze direction of a user toward an image, an estimation unit configured to estimate a gaze area in the image on the basis of the eye-gaze direction and the image, the eye-gaze direction being detected by the eye-gaze direction detection unit, a chased object detection unit configured to detect a chased object being eye-chased by the user in the image, on the basis of the time-series gaze areas estimated by the estimation unit, a tracking unit configured to search for and track the chased object detected by the chased object detection unit, and an image control unit configured to control an image of the chased object tracked by the tracking unit.

## Description

### Technical Field

The present technique relates to an image processing device, an image processing method and a program, more specifically to an image processing device, an image processing method and a program capable of more appropriately imaging or displaying an image of an object at which a user is gazing.

### Background Art

There has been proposed assistive techniques for assisting a user to image and display an image.

As such an assistive technique, there has been proposed a technique of automatically focusing on a specific object in an image in imaging the image (see Patent Literature 1). In addition, other techniques have been proposed such as zooming in on an image viewed by a user with center at a specific object in the image.

### Citation List

### Patent Literature

Patent Literature 1: JP 2012-137600A

### Summary of Invention

### Technical Problem

However, by the above techniques, the specific object of control target has been sometimes not the same as a subject of the user's intent, so that an image has been imaged or displayed after subjected to image processing based on the control target that does not match the user's intent.

The present technique has been made in view of the circumstances described above, and especially enables the imaging and displaying of an image in which the intent of a user is appropriately reflected, by detecting an eye-gaze direction of the user and thereby accurately capturing a subject of the user's intent as a control target in the image, and then by appropriately perform processing on the image based on the captured control target.

### Solution to Problem

An image processing device according to an embodiment of the present technology includes an eye-gaze direction detection unit configured to detect an eye-gaze direction of a user toward an image, an estimation unit configured to estimate a gaze area in the image on the basis of the eye-gaze direction and the image, the eye-gaze direction being detected by the eye-gaze direction detection unit, a chased object detection unit configured to detect a chased object being eye-chased by the user in the image, on the basis of the time-series gaze areas estimated by the estimation unit, a tracking unit configured to search for and track the chased object detected by the chased object detection unit, and an image control unit configured to control an image of the chased object tracked by the tracking unit.

The chased object detection unit may detect a face image as the chased object being eye-chased by the user in the image, on the basis of the time-series gaze areas estimated by the estimation unit.

The chased object detection unit may detect a specific object as the chased object being eye-chased by the user in the image, on the basis of the time-series gaze areas estimated by the estimation unit.

The image processing device may be an eyeglass-type imaging device, and may further include an imaging unit configured to image an image of a field of view that the user can view when wearing the eyeglass-type imaging device. The eye-gaze direction detection unit may detect an eye-gaze direction of the user toward the image of the field of view that the user can view when wearing the eyeglass-type imaging device. The image control unit may perform control in a manner that the imaging unit optimally images the image of the chased object being tracked by the tracking unit.

The image processing device may be an imaging device handheld and used by the user for imaging, and may further include an imaging unit configured to image the image, and a viewfinder through which the image imaged by the imaging unit is looked at. The eye-gaze direction detection unit may detect an eye-gaze direction of the user looking through the viewfinder toward the image imaged by the imaging unit. The image control unit may perform control in a manner that the imaging unit optimally images the image of the chased object being tracked by the tracking unit.

A reproducing unit configured to reproduce an image, and an image processing unit configured to perform processing on the image reproduced by the reproducing unit, and to cause a display unit to display the reproduced image may be further included. The eye-gaze direction detection unit may detect an eye-gaze direction of the user viewing the image displayed on the display unit. The image processing unit may perform processing on the image reproduced by the reproducing unit and causes the display unit to display the image in a manner that the image of the chased object being tracked by the tracking unit is optimally displayed.

The eye-gaze direction detection unit may be the eyeglass-type device, and may detect an eye-gaze direction of the user toward an image of a field of view in which the user can view when wearing the eyeglass-type imaging device.

An image processing method according to an embodiment of the present technology includes performing eye-gaze direction detection processing of detecting an eye-gaze direction of a user toward an image, performing estimation processing of estimating a gaze area in the image on the basis of the eye-gaze direction, and the image, the eye-gaze direction being detected by the eye-gaze direction detection processing, performing chased object detection processing of detecting a chased object being eye-chased by the user in the image, on the basis of the time-series gaze areas estimated by the estimation processing, performing tracking processing of searching for and tracking the chased object detected by the chased object detection processing, and performing image control processing of controlling an image of the chased object tracked by the tracking processing.

A program according to an embodiment of the present technology causes a computer to perform processing, the processing including an eye-gaze direction detection step of detecting an eye-gaze direction of a user toward an image, an estimation step of estimating a gaze area in the image on the basis of the eye-gaze direction and the image, the eye-gaze direction being detected by processing the eye-gaze direction detection step, a chased object detection step of detecting a chased object being eye-chased by the user in the image, on the basis of the time-series gaze areas estimated by processing the estimation step, a tracking step of searching for and tracking the chased object detected by processing the chased object detection step, and an image control step of controlling an image of the chased object tracked by processing the tracking step.

In an aspect of the present technique: an eye-gaze direction of a user toward an image is detected; a gaze area in the image is estimated on the basis of the detected eye-gaze direction and the image; a chased object being eye-chased by the user in the image is tracked on the basis of the estimated time-series gaze areas; the detected chased object is searched for and tracked; and an image of the tracked chased object is controlled.

The image processing device in the present technique may be an independent device or a block configured to perform image processing.

### Advantageous Effects of Invention

The aspect of the present technique enables the imaging and displaying of an image in which the intent of a user is appropriately reflected, by appropriately selecting a subject of the user's intent, and then by performing processing on the image with the subject being set as a control target in the image.

### Brief Description of Drawings

[FIG. 1] FIG. 1 is a diagram illustrating an exemplary external appearance configuration of an imaging device to which the present technique is applied according to a first embodiment.
[FIG. 2] FIG. 2 is a functional block diagram illustrating an example configuration of the imaging device of FIG. 1.
[FIG. 3] FIG. 3 is a flowchart illustrating tracking imaging processing performed by the imaging device of FIGS. 1 and 2.
[FIG. 4] FIG. 4 is a diagram illustrating the tracking imaging processing performed by the imaging device of FIGS. 1 and 2.
[FIG. 5] FIG. 5 shows external appearance views illustrating an example configuration of modification of the imaging device of FIG. 1.
[FIG. 6] FIG. 6 is an external appearance view illustrating an example configuration of a reproduction processing system to which the present technique is applied according to a second embodiment.
[FIG. 7] FIG. 7 is a functional block diagram illustrating an example configuration of component devices of the reproduction processing system of FIG. 6.
[FIG. 8] FIG. 8 is a flowchart illustrating tracking reproduction processing performed by the reproduction processing system of FIGS. 6 and 7.
[FIG. 9] FIG. 9 shows an example configuration of a general-purpose personal computer.

### Description of Embodiments

Hereinafter, modes for carrying out the present disclosure (hereinafter referred to as embodiments) will be described with reference to the drawings. Note that the description will be given in the following order.
1. First embodiment (an example using an eyeglass-type imaging device)
2. Modification (an example using a normal imaging device)
3. Second embodiment (an example using a reproducing device)

### <1. First embodiment>

### <Example configuration of imaging device>

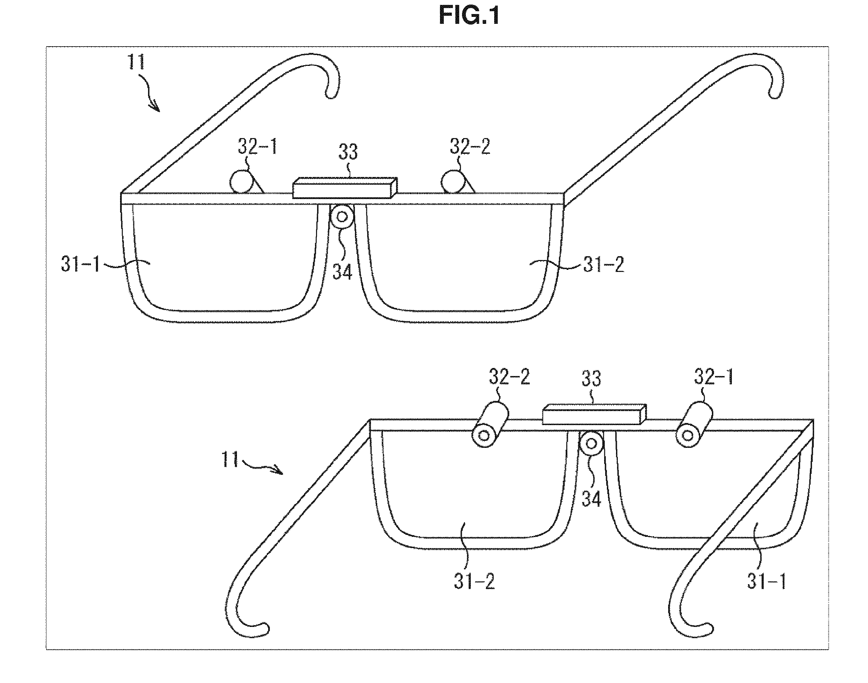

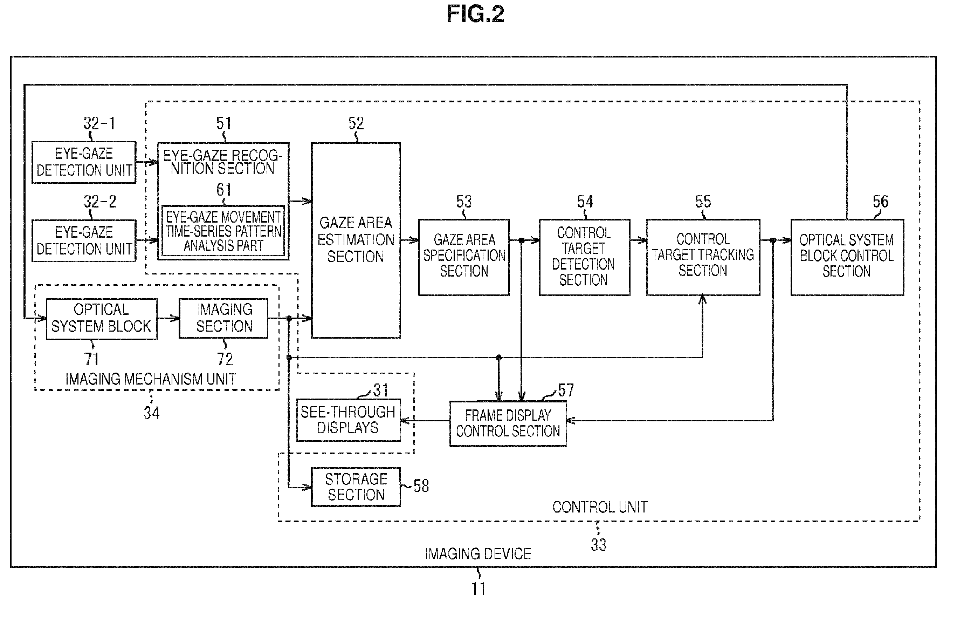

FIG. 1 is a diagram illustrating an exemplary external appearance configuration of an imaging device to which the present technique is applied. FIG. 2 is a functional block diagram illustrating functions for implementing the imaging device to which the present technique is applied. The imaging device of FIG. 1 is an eyeglass-type imaging device, and when worn by a user in a manner similar to wearing eyeglasses, the imaging device images an image of an eyesight that the user sees through the worn eyeglasses. At that time, the imaging device of FIG. 1 estimates a gaze area within the image of the user by detecting the user's eye-gaze direction, then specifies, as a control target, a subject at which the user is gazing on the basis of information on the estimated gaze area, and images the image while tracking and focusing on the specified subject of control target.

More specifically, the imaging device 11 of FIG. 1 is configured of see-through displays 31-1 and 31-2, eye-gaze detection units 32-1 and 32-2, a control unit 33, an imaging mechanism unit 34 and an eyeglass-type frame 35. Note that, when it is not particularly necessary to distinguish, the see-through displays 31-1 and 31-2, and the eye-gaze detection units 32-1 and 32-2 will be simply referred to as see-through displays 31 and eye-gaze detection units 32. The other components will be similarly referred to as above, too.

The see-through displays 31, being components provided, instead of eyeglass lenses, to the normal eyeglass-type frame 35, are each formed of an organic electro-luminescence (EL) or the like, for example, and the entire operation thereof is controlled by the control unit 33. When a user uses the eyeglass-type imaging device 11 in a manner similar to wearing eyeglasses, the see-through displays 31 enable the user to see light passing through the see-through displays 31, that is, a scene passing through the see-through displays 31. Additionally, based on the eye-gaze direction detected by the eye-gaze detection units 32, the see-through displays 31 display a gaze frame indicating a gaze area where the user is gazing. Displaying a gaze frame as described above enables the user to recognize which area in a scene viewable through the see-through displays 31 is set as a gaze area in association with the viewable scene. Furthermore, the see-through displays 31 display a target frame corresponding to an area including a target object, which is an object specified as a subject at which the user is gazing on the basis of time-serially detected gaze areas and thus specified as a control target. Displaying the target frame indicating an area including an object specified as a subject of control target as described above enables the user to recognize, in association with a scene viewable through the see-through displays 31, which area in the viewable scene is set as the subject specified as the control target. In other words, the see-through displays 31 display a gaze frame in principle or a target frame while keeping the other areas transparent.

Each eye-gaze detection unit 32 is an imaging device capable of imaging a pupil position of an eye of the user wearing the eyeglass-type frame 35 in a manner similar to using eyeglasses, and is formed of a charge coupled device (CCD) or a complementary metal oxide semiconductor (CMOS), for example. The eye-gaze detection units 32 supply the control unit 33 with an eye-gaze image capturing motion of the pupil positions, which are necessary to recognize the eye-gaze direction, for example.

The imaging mechanism unit 34 is provided to the eyeglass-type frame 35 at a position between the right and left see-through displays 31-1 and 31-2 so as to image scenes in the opposite direction to the wearing user. The imaging mechanism unit 34 supplies the control unit 33 with an imaged image. The angle of view of an image imaged by the imaging mechanism unit 34 is similar to the field of view that the user wearing the eyeglass-type imaging device 11 sees through the see-through displays 32-1 and 32-2. Accordingly, wearing the imaging device 11, the user can monitor the image imaged by the imaging mechanism unit 34 by viewing just exactly the field of view through the see-through displays 31-1 and 31-2.

In addition, as shown in FIG. 2, the control unit 33 includes an eye-gaze recognition section 51, a gaze area estimation section 52, a gaze area specification section 53, a control target detection section 54, a control target tracking section 55 and an optical system block control section 56. The imaging mechanism unit 34 includes an optical system block 71 including a diaphragm and various lenses, and an imaging section 72 including a CCD, a CMOS or the like.

The eye-gaze recognition section 51 acquires an eye-gaze image showing the user's pupil positions supplied by the eye-gaze detection units 32-1 and 32-2, thereby recognizes the eye-gaze direction, and supplies the gaze area estimation section 52 with information on the eye-gaze direction.

More specifically, the eye-gaze recognition section 51, which includes an eye-gaze movement time-series pattern analysis part 61, time-serially analyzes the movement pattern of the eye-gaze direction on the basis of the time-series eye-gaze images, and supplies the gaze area estimation section 52 with information on the movement pattern of the eye-gaze direction obtained as an analysis result, and on the eye-gaze direction.

The time-series pattern of the eye-gaze direction may be any of various patterns, examples of which include visual fixation (fixation), smooth pursuit movement (pursuit) and saccadic eye movement (saccade). As used herein, fixation is a pattern indicating a state where eyeballs stay still without moving. Pursuit is a pattern indicating that, when a viewing-target object is moving, eyeballs follow the movement to move slowly, thereby keeping gazing at the target object. Saccade is a pattern of an eye-gaze direction indicating that an eye-gaze line is quickly shifted.

Among these patterns, each pattern including either of fixation and pursuit is regarded as a time-series pattern indicating that the user is gazing at a subject of the user's interest with the user's own eyes. Accordingly, when the time-series pattern of the eye-gaze direction is fixation or pursuit, the gaze area estimation section 52 regards the user as gazing at a target object at that moment, and estimates a gaze area based on the eye-gaze direction of the moment.

More specifically, when the movement pattern of the eye-gaze direction is fixation or pursuit, the gaze area estimation section 52 estimates an gaze area on the basis of information on the eye-gaze direction supplied by the eye-gaze recognition section 51, by using an eye-gaze image imaged by the imaging section 72, which is formed of a CCD, a CMOS or the like, of the imaging mechanism unit 34. Then, the gaze area estimation section 52 supplies the gaze area specification section 53 with information on the gaze area obtained as an estimation result.

The gaze area specification section 53 specifies the gaze area based on the information on the gaze area supplied by the gaze area estimation section 52 as the estimation result, and supplies the control target detection section 54 and a frame display control section 57 with information indicating the position of the specified gaze area.

The control target detection section 54 detects, in the image, an area including a subject of control target on the basis of the information on the specified gaze area, and supplies the control target tracking section 55 with an image of the area including the subject of control target.

The control target tracking section 55 performs tracking by time-serially searching the image imaged by the imaging section 72 of the imaging mechanism unit 34 for information on the area including the subject of control target in the image. Then, the control target tracking section 55 supplies the optical system block control section 56 and the frame display control section 57 with information indicating the position of the area of the object of tracking target that is being tracked in the image.

The optical system block control section 56 controls the optical system block 71 provided to the imaging mechanism unit 34 so that the subject of control target in the image may be focused on, and so that the imaging section 72 may image the image with the subject of control target in the image focused on.

Based on the information on the gaze area supplied by the gaze area specification section 53 and the image imaged by the imaging section 72, the frame display control section 57 controls the see-through displays 31 so that a rectangular gaze frame in dashed line may be displayed on the see-through displays at a position corresponding to the gaze area. Additionally, based on the information on the position of the subject of control target in the image supplied by the control target tracking section 55 and the image imaged by the imaging section 72, the frame display control section 57 controls the see-through displays 31 so that a rectangular target frame in solid line may be displayed on the see-through displays 31 at a position corresponding to the position where the subject of control target exists.

A storage section 58, formed of a semiconductor memory or the like, for example, compresses data of the image imaged by the imaging section 72 of the imaging mechanism unit 34 in a predetermined compression format, and stores the compressed data therein. In addition, the storage section 58 retrieves the stored image data and displays the image on an unillustrated display unit or the like as necessary.

### <Tracking imaging processing performed by imaging device of FIGS. 1 and 2>

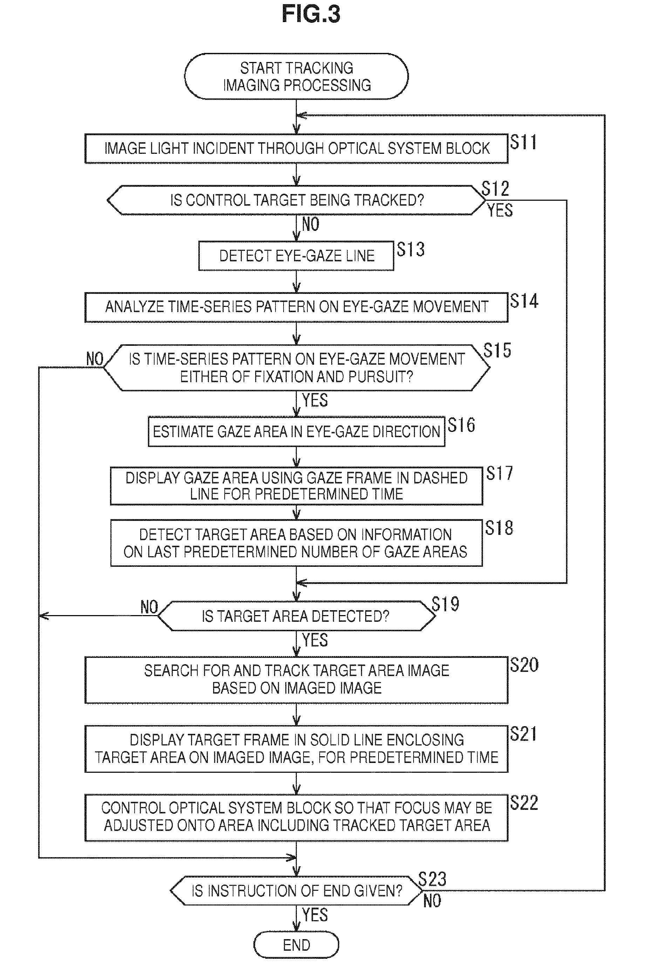

Next, with reference to the flowchart of FIG. 3, description will be given of tracking imaging processing performed by the imaging device 11 of FIGS. 1 and 2.

In step S11, the imaging mechanism unit 34 controls the imaging section 72 so as to image images each consisting of light rays incident through the optical system block 71, and serially supplies the imaged images to the gaze area estimation section 52, the control target tracking section 55 and the frame display control section 57 while serially storing the imaged images in the storage section 58. In this event, the imaged images are stored in the storage section 58 after compressed in a predetermined compression format.

In step S12, based on whether or not information on an area, in the image, including an image of a subject of control target is supplied by the control target tracking section 55, the frame display control section 57 determines whether or not the control target is being tracked. If the image of the subject of control target is determined not to be being tracked in step S12, the processing proceeds to step S13.

In step S13, the eye-gaze detection units 32-1 and 32-2 image eye-gaze images showing pupil positions of the right and left eyes of the user wearing the eyeglass-type frame 35, respectively, and serially supply the imaged eye-gaze images to the eye-gaze recognition section 51.

In step S14, the eye-gaze recognition section 51 controls the eye-gaze movement time-series pattern analysis part 61 so as to cause the eye-gaze movement time-series pattern analysis part 61: to analyze the movement pattern of the eye-gaze direction on the basis of the time-series eye-gaze images; and to supply the gaze area estimation section 52 with time-series information on the eye-gaze direction and the analysis result of the eye-gaze movement pattern.

In step S15, the gaze area estimation section 52 determines whether or not the eye-gaze movement pattern is either of fixation and pursuit, that is, whether or not the user is gazing at a specific subject. If the eye-gaze movement pattern is determined to be either of fixation and pursuit, for example, the user is regarded to be gazing at a specific subject in step S15, and the processing proceeds to step S16.

In step S16, the gaze area estimation section 52 estimates a center position of a gaze area in the image imaged by the imaging section 72 of the imaging mechanism unit 34 on the basis of the information on the eye-gaze direction, and supplies the gaze area specification section 53 with information on the center position of the gaze area obtained as an estimation result.

In step S17, the gaze area specification section 53 specifies the rectangular gaze area in the image imaged by the imaging section 72 on the basis of the center position of the gaze area supplied by the gaze area estimation section 52, and supplies the specified gaze area to the control target detection section 54 and the frame display control section 57. In response to this processing, the frame display control section 57 causes the see-through displays 31 to display a gaze frame in dashed line for a predetermined time so that, within a range that the user can view through the see-through displays 31, the gaze frame may enclose an area corresponding to the specified gaze area.

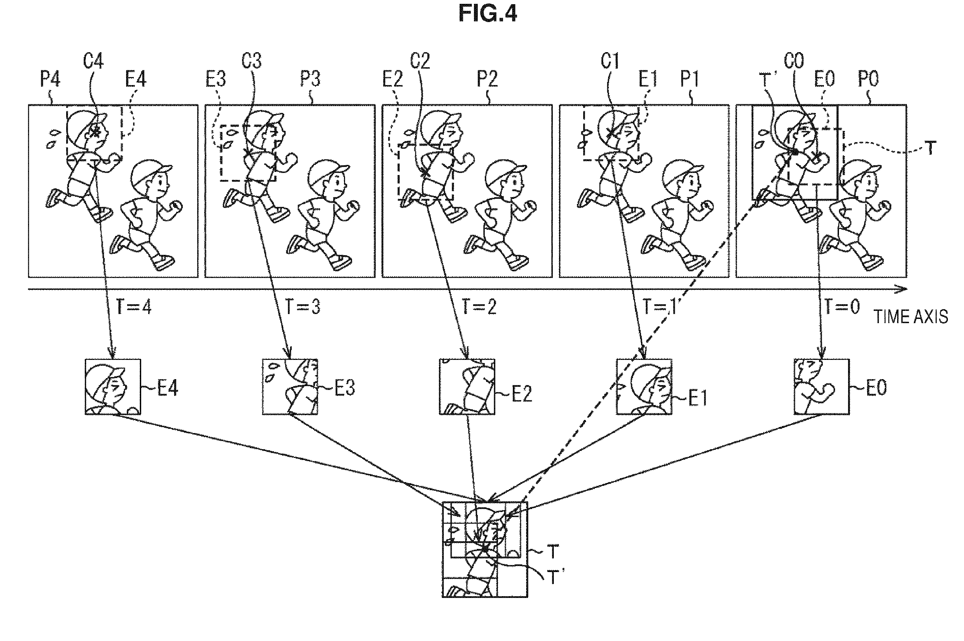

In step S18, based on information on the last predetermined number of gaze areas, the control target detection section 54 detects a subject of control target, that is, a subject at which the user is interestedly gazing. As shown in the upper part of FIG. 4, for example, based on images P0 to P4 imaged by the imaging section 72 at respective current time points T = 0 to 4 and on images of gaze areas E0 to E4 of the respective images P0 to P4, the control target detection section 54 calculates an area T including a subject of control target. Note that the images P0 to P4 are images time-serially imaged by the imaging section 72, capturing scenes that the user wearing the eyeglass-type frame 35 visually recognizes through the see-through displays 31. Note also that C0 to C4 in the respective gaze areas E0 to E4 are center positions of the gaze areas estimated based on the eye-gaze direction. In other words, the gaze areas E0 to E4 are rectangular areas specified with center at the positons C0 to C4 in the eye-gaze direction, respectively.

Furthermore, in association with scenes that the user sees through the see-through displays 31 in the user's field of view, the user visually recognizes the gaze areas E0 to E4 as gaze frames which are displayed on the see-through displays 31 for a predetermined time. Accordingly, frames in dashed line enclosing the gaze areas E0 to E4 will also be hereinafter referred to as gaze frames E0 to E4, respectively. Specifically, in each of the images P0 to P4 in the upper part of FIG. 4 which captures two persons running in the right direction in FIG. 4, the two running persons and the background are the scene that the user can visually recognize with light passing through the see-through displays 31. In addition, this visually recognizable scene is identical to the image imaged by the imaging section 72. Displaying the gaze frames E0 to E4 in dashed line on the see-through displays 31 on the basis of information on the eye-gaze direction of the user enables the user to see the gaze frames E0 to E4 superposed on the scene, and thereby to visually recognize each of the gaze frames E0 to E4 as an area including the subject the user is gazing at.

In addition, the control target detection section 54 extracts image pieces of the areas indicated by the gaze frames E0 to E4 from the images P0 to P4, respectively, as shown in the middle part of FIG. 4, and detects an area including the subject of control target, that is, a target area T, by the method like overlaying one of the image pieces on another with identical parts aligned with one another, as shown in the lower part of FIG. 4. Specifically, by the method like overlaying one of the area image pieces indicated by the gaze frames E0 to E4 on another with identical parts aligned with one another, the control target detection section 54 detects a specific object such as a face image or a vehicle image as the subject of control target, thereby detecting, as the target area, an area including the subject of control target.

In step S19, the control target detection section 54 determines whether or not the target area including the subject of control target can be detected. More specifically, if the overlapping area size of the gaze frames extracted from the last predetermined number of images is smaller than an area size that is a predetermined percent larger than the area size set as the size of the target area T, the control target detection section 54 determines that an area defined by the gaze frames in the last multiple images is fixed, in other words, determines that the eye-gaze direction of the user is fixed on the subject of control target, and thus determining the target area to be detected.

In step S 19, if it is determined that the target area is detected, in other words, determined that the eye-gaze direction of the user is fixed on the subject of control target, for example, the processing proceeds to step S20.

In step S20, the control target detection section 54 supplies the control target tracking section 55 with image information on the detected target area. Upon acquisition of the image information on the target area, the control target tracking section 55 searches the image supplied by the imaging section 72 for an image piece of the target area. The control target tracking section 55 tracks the target area by searching for the target area image piece, and supplies the optical system block control section 56 and the frame display control section 57 with information indicating an area where the target area image piece is found within the image, as a tracking result.

In step S21, based on the information on the area where the tracked target frame image piece is found, the frame display control section 57 causes the see-through displays 31 to display, for a predetermined time, a target frame in solid line enclosing the area where the tracked target frame image piece is found. Note that the target frame in solid line enclosing the target area T will also be hereinafter referred to as target frame T. Specifically, in the case of FIG. 4, the target frame T is displayed on the current image P0 imaged at the time point T=0. In the upper part of FIG. 4, the target frame T is displayed so as to enclose the left one of the two persons running in the right direction in the image P0. Displaying in the above manner enables the user to recognize that currently the user is interestedly gazing at the left one of the two running persons.

In step S22, the optical system block control section 56 controls the optical system block 71 of the imaging mechanism unit 34 so that the focus may be adjusted onto a point near the center of an image piece including the tracked control target within an image to be imaged. Specifically, in the case of FIG. 4, by tracking the target frame T, the optical system block 71 is controlled so that a center position T' of the target frame T may be focused on, so that an image focused on the subject in the target frame T can be imaged.

In step S23, it is determined whether or not an unillustrated operation unit is operated to give an instruction of the end of operation. If the instruction of the end of operation is not given, the processing returns to step S11 and the succeeding steps are repeated. If the instruction of the end of operation is given in step S23, the processing is finished.

On the other hand, if the control target is determined to be being tracked in step S12, the processing of steps S13 to S18 is skipped and the processing proceeds to step S19. Specifically, the fact that the control target is being tracked means the condition where the subject of control target at which the user is interestedly gazing has already been detected and thus focus adjustment is enabled. Accordingly, since the processing for specifying the gaze area and the like is not necessary, the processing of steps S 13 to S18 is skipped.

If the eye-gaze movement pattern is not either of fixation and pursuit in step S15, or if the control target is not detected in step S19, the control target is determined not to be found, and the processing proceeds to step S23.

The processing described above enables the user to image an image focused on a subject that the user wants to bring into focus only by gazing at the subject. Especially in such an eyeglass-type imaging device as the imaging device 11 shown in FIGS. 1 and 2, if there is desired to be provided components receiving operations and the like for specifying a subject of control target, it will be found difficult to provide an operation unit and the like at any easily operable position. Alternatively, if the operation unit is provided by placing priority on operability, the design property might be spoiled. Thus, by enabling the user to shift a focus point by using the eye-gaze direction instead of providing any special operation unit as described above, the user is enabled to image an image at the user's intended focus point, without reducing operability or design property.

Hereinabove, the example has been described in which the control target of the user's interest is specified based on the eye-gaze direction, and the optical system block is controlled so that the existence position of the specified subject of control target may be focused on. However, other image controls may also be performed based on the area including the subject of control target found as the search result. For example, the optical system block may be controlled so that the area including the subject of control target can be zoomed in on.

### <2. Modification >

### <Another example configuration of imaging device>

Hereinabove, description has been given of the example using an eyeglass-type imaging device. However, applying the present technique to a generally used handheld imaging device naturally also exhibits a similar effect.

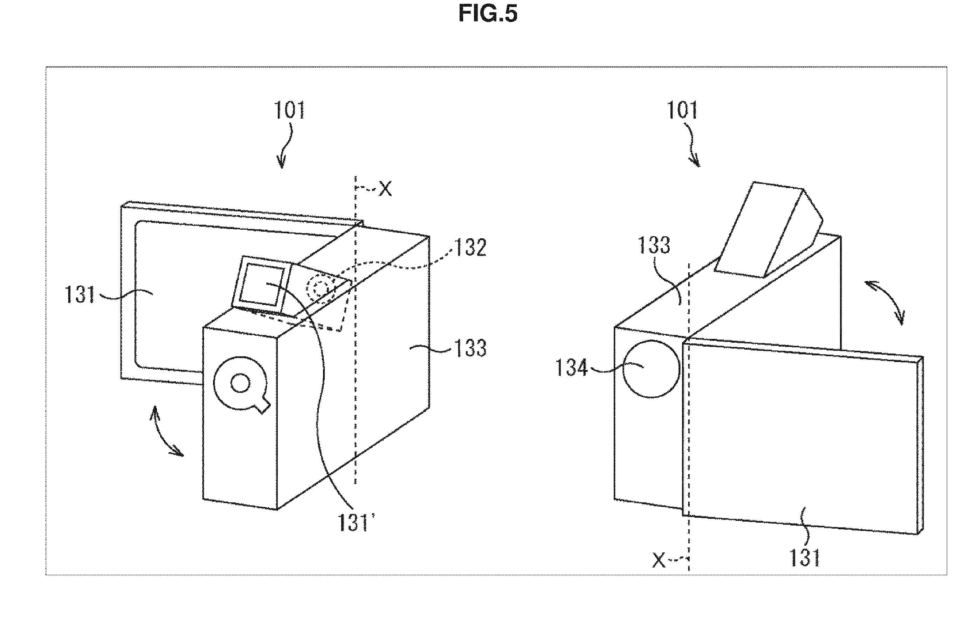

Specifically, as shown in FIG. 5, a handheld imaging device 101 includes: a display unit 131 formed of an LCD, an organic EL or the like; an eye-gaze detection unit 132 having functions similar to those of the eye-gaze detection units 32; a main body 133 having functions substantially similar to those of the control unit 33; and an imaging mechanism unit 134 similar to the imaging mechanism unit 34.

Note that, in FIG. 5, the right part is a front external appearance view showing the imaging mechanism unit 134 directed to the front, while the left part is a back external appearance view showing the back side of the right part of FIG. 5. The display unit 131 displays an image obtained by synthesizing an image imaged by the imaging mechanism unit 134 with images of a gaze frame and a target frame displayed on the see-through displays 31. In addition, a look-through window 131' displays an image similar to the image displayed on the display unit 131, as a small image that the user can view by looking through the look-through window 131'. The display unit 131 is rotatable in the arrow directions around the position indicated by the dashed line X, and turns off its display while being folded onto the main body 133.

However, the look-through window 131' is what is called a viewfinder, and is provided with a small LCD or an organic EL to display an image similar to the image displayed on the display unit 131. Accordingly, by looking through the look-through window 131' with the right or left eye, the user can view the same image as displayed on the display unit 131. In addition, the look-through window 131' is provided with the eye-gaze detection unit 132 for imaging, from the inside, an eye-gaze image showing pupil positions used for recognizing the user's eye-gaze direction. Accordingly, when the user executes image processing while looking through this look-through window 131', a gaze area is estimated based on the eye-gaze direction, so that a gaze frame is displayed, and thereafter a subject of control target is specified, so that a target frame is displayed, as similar to the imaging device 11 in FIGS. 1 and 2. Furthermore, an unillustrated optical system block is controlled so that a subject existing at a position corresponding to the target frame area in the image may be focused on.

As a result, the handheld-type imaging device 101 as shown in FIG. 5 can exhibit an effect similar to that of the imaging device 11 shown in FIGS. 1 and 2, too.

Note that the block diagram for the imaging device 101 of FIG. 5 is omitted since the imaging device 101 has functions basically the same as those of the imaging device 11 of FIGS. 1 and 2. Additionally, description for tracking imaging processing performed by the imaging device 101 of FIG. 5 is omitted, too, since the processing is substantially similar to the processing described with reference to the flowchart of FIG. 3.

### <3. Second embodiment>

### <Example configuration of reproduction system>

Hereinabove, an example has been described in which the imaging device performs tracking imaging processing, whereby, by the user's simple act of sifting the eye-gaze direction onto the user's desired subject, the imaging device is enabled: to specify a subject of control target; to display a target frame indicating the specified subject; and to image an image with the optical block controlled so that a point near the center of the target frame may be focused on within the image to be imaged. However, by using the capability of tracking the target object of the user's interest on the basis of the eye-gaze direction, reproduction processing may also be performed by a similar method including: searching a reproduced image for a subject of control target of the user's interest; tracking the subject of control target found as the search result; and displaying the subject after performing appropriate image processing thereon.

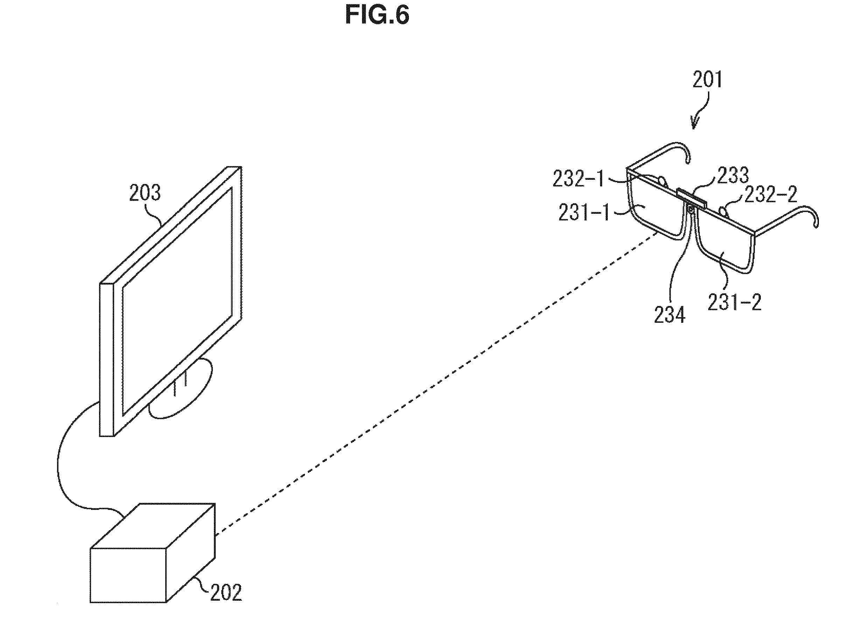

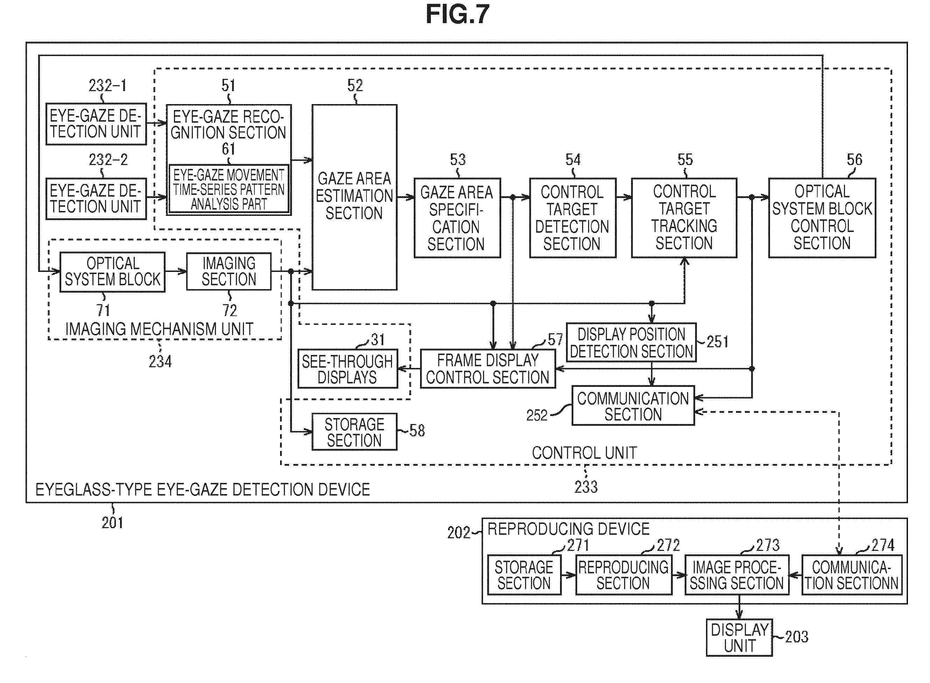

FIG. 6 shows a reproduction processing system configured to perform reproduction processing for generating and displaying an image zoomed in on with center at a target area, which includes a subject of control target in which the user interested. FIG. 7 is a functional block diagram for illustrating functions for implementing component devices of the reproduction processing system of FIG. 6.

The reproduction processing system of FIG. 6 includes an eyeglass-type eye-gaze detection device 201, a reproducing device 202 and a display unit 203.

Though having an external appearance similar to that of the eyeglass-type imaging device 11 of FIG. 1, the eyeglass-type eye-gaze detection device 201 further includes the function of transmitting information on a target area to the reproducing device 202. The reproducing device 202 searches a reproduced image for the target area on the basis of information on the target area transmitted by the eyeglass-type eye-gaze detection device 201. In addition, the reproducing device 202 generates an image zoomed in on at a predetermined magnification with center at a center position of the target area found as the search result, and causes the display unit 203 to display the generated image.

Note that see-through displays 231-1 and 231-2, eye-gaze detection units 232-1 and 232-2, a control unit 233 and an imaging mechanism unit 234 correspond to and have basically similar functions to those of the see-through displays 31-1 and 31-2, the eye-gaze detection units 32-1 and 32-2, the control unit 33 and the imaging mechanism unit 34 of the imaging device 11, respectively, and thus the description thereof is omitted. However, the control unit 233 is additionally provided with a display position detection section 251 configured to detect a display position of the display unit 203 within an image imaged by the imaging section 72 and a communication section 252 configured to transmit target area information to the reproducing device 202. Also note herein that an image imaged by the imaging mechanism unit 234 is used only for the purpose of specifying a target area including a subject of control target, and is not basically stored.

The reproducing device 202 reproduces an image whose reproduction instruction is given and displays the reproduced image on the display unit 203. More specifically, the reproducing device 202 includes a storage section 271, a reproducing section 272, an image processing section 273 and a communication section 274. The storage section 271 stores therein image data to be reproduced, and supplies the image data to the reproducing section 272 as necessary. The reproducing section 272 reproduces an image based on the image data retrieved from the storage section 271, and supplies the image processing section 273 with information on the reproduced image. By using the image supplied by the reproducing section 272, and based on information on a display position of the display unit 203 supplied by the eyeglass-type eye-gaze detection device 201 via the communication section 274 as well as based on a center position of a target area, the image processing section 273 generates an image enlarged at a predetermined magnification with respect to the center position of the target area. Then, the image processing section 273 causes the display unit 203 to display the enlarged image.

### <Tracking reproduction processing performed by reproduction processing system of FIGS. 6 and 7>

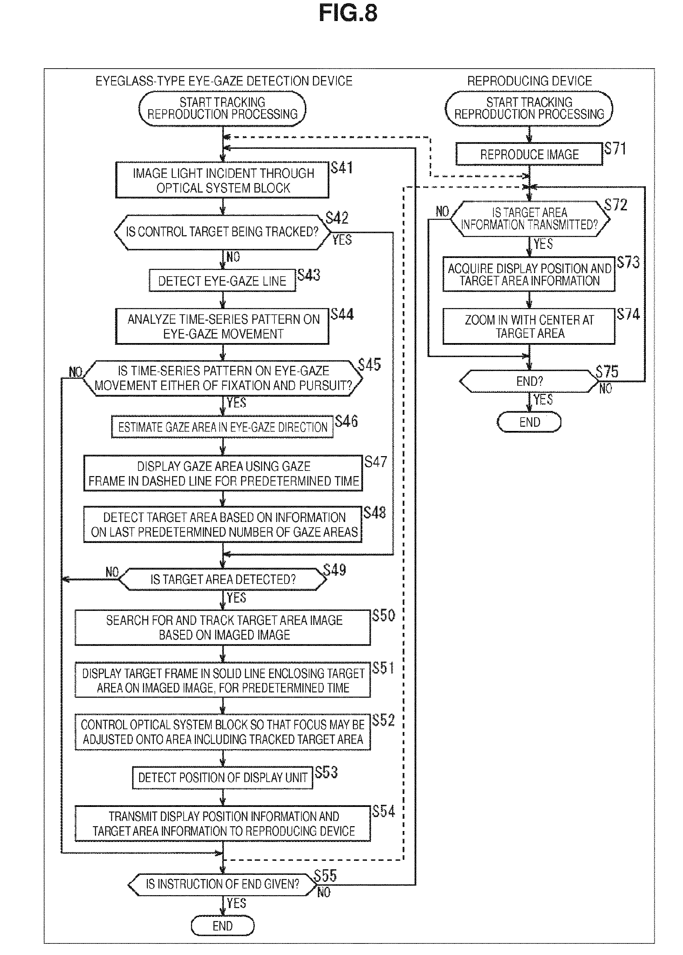

Next, with reference to the flowchart of FIG. 8, description will be given of tracking reproduction processing performed by the reproduction processing system of FIGS. 6 and 7. Note that the processing of steps S41 to S52 and S55 in the flowchart of FIG. 8 is similar to the processing of steps S11 to S23 in the flowchart of FIG. 3, so that the description thereof is omitted. Basically, some instructions to reproduce image data are given to the reproducing device 202 by using an unillustrated operation unit or the like, and then the processing of step S71 is performed first, in which the reproducing device 202 reproduces the image data, and in which the display unit 203 displays the reproduced image.

Specifically, in step S71, out of image data stored in the storage section 271, the reproducing section 272 retrieves image data requested by using the unillustrated operation unit or the like, then reproduces an image using the retrieved image data, and supplies the reproduced image to the image processing section 273. The image processing section 273 causes the display unit 203 to display the image supplied by the reproducing section 272 as it is reproduced.

Then, after a target area is specified by the processing of step S41 to S52, the display position detection section 251 detects a display position of the display screen of the display unit 203 by using the image imaged by the imaging section 72, and supplies the communication section 252 with information on the display position, in step S53. Then, in step S54, the communication section 252 transmits, to the reproducing device 202, the display position information of the display unit 203 and the target area information supplied by the control target tracking section 55.

In step S72, the communication section 274 determines whether or not the target area information is transmitted by the eyeglass-type eye-gaze detection device 201. If the target area information is not transmitted by the eyeglass-type eye-gaze detection device 201 in step S72, the processing proceeds to step S75, where it is determined whether or not the instruction of the end of processing is given and whether or not the reproduction is finished. If the instruction of the end of processing is not given or the reproduction is not finished in step S75, the processing returns to step S72. If the instruction of the end of processing is given or the reproduction is finished in step S75, the processing is finished.

On the other hand, if, in step S72, the target area information is transmitted by the processing of step S54, for example, the processing proceeds to step S73.

In step S73, the communication section 274 acquires the target area information and the display position of the display unit 203 imaged by the imaging section 72 and supplied by the eyeglass-type eye-gaze detection device 201, and supplies the image processing section 273 with the target area information and the display position.

In step S74, based on the target area information and the display position of the display unit 203 within the image imaged by the imaging section 72, the image processing section 273 specifies, within the image region displayed on the display unit 203, a position corresponding to the target area that is specified using the user's eye-gaze direction. In addition, the image processing section 273 causes the display unit 203 to display the reproduced image zoomed in on at a predetermined magnification with center at an area specified as the target area within the image region displayed on the display unit 203.

By the processing described above, in response to the user's simple act of turning the gaze on a subject of the user's interest when viewing a reproduced image while wearing the eyeglass-type eye-gaze detection device 201, an area around the subject of interest is estimated as a gaze area, and the area of the subject of interest is set as a target area on the basis of information on the image pieces set as the gaze areas. As a result, the user can view the image zoomed in on at a predetermined magnification with center at the target area. Accordingly, only by gazing at a subject of interest, the user can view, as a reproduced image, an image zoomed in on with center at the subject. Note that, though description has hereinabove been given of the example in which the target area image is zoomed in on, other image processing may also be performed on the target area. For example, the resolution of the target area image may be increased or, conversely, reduced.

Furthermore, though description has hereinabove been given of the example using the eyeglass-type eye-gaze detection device 201, similar processing may be performed by using an additional imaging device for specifying the user's pupil positions. Specifically, the user's eye-gaze direction may be specified based on an image imaged by the additional imaging device provided to the display unit 203 at such a position as the top thereof so as to face the user viewing the display unit 203, for example. Moreover, instead of being displayed on the see-through displays 231, the gaze frame and the target frame may be displayed on the display unit 203 after synthesized with the reproduced image.

As described above, the present technique makes it possible to more appropriately image and display an image of an object at which the user is gazing.

Incidentally, the above series of processes can, for example, be executed by hardware, or can be executed by software. In the case where the series of processes is executed by software, a program configuring this software is installed in a computer included in dedicated hardware, or a general-purpose personal computer which can execute various functions when various programs are installed, etc., from a recording medium.

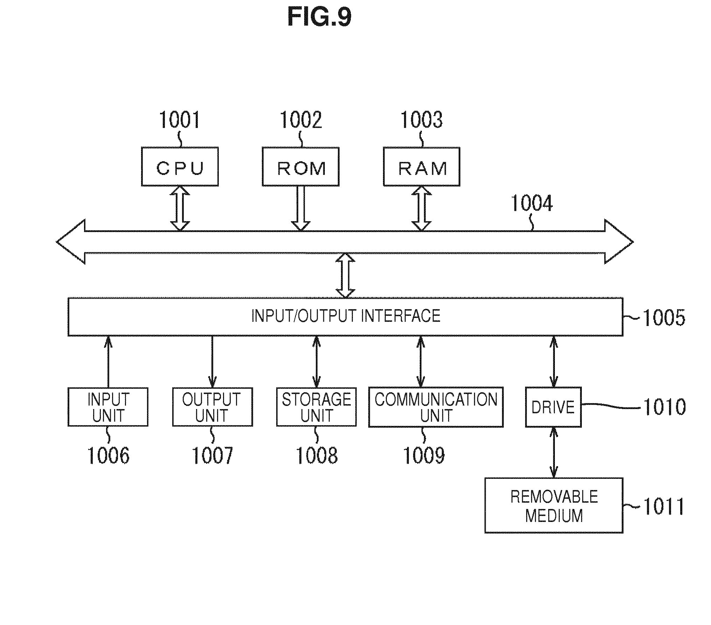

FIG. 9 shows an example configuration of a general-purpose personal computer. The computer includes a CPU (Central Processing Unit) 1001. An input/output interface 1005 is connected to the CPU 1001 through a bus 1004. A ROM (Read Only Memory) 1002 and a RAM (Random Access Memory) 1003 are connected to the bus 1004.

An input unit 1006 including an input device, such as a keyboard, a mouse, etc., which is used by the user to input an operation command, an output unit 1007 which outputs a process operation screen or an image of a process result to a display device, a storage unit 1008 including a hard disk drive etc. which stores a program or various items of data, and a communication unit 1009 including a LAN (Local Area Network) adaptor etc. which performs a communication process through a network typified by the Internet, are connected to the input/output interface 1005. Also, connected is a drive 1010 which reads and writes data from and to a removable medium 1011, such as a magnetic disk (including a flexible disk), an optical disk (including a CD-ROM (Compact Disc-Read Only Memory) and a DVD (Digital Versatile Disc)), an magneto-optical disk (including an MD (Mini Disc)), or a semiconductor memory, etc.

The CPU 1001 executes various processes according to a program stored in the ROM 1002 or a program which is read from the removable medium 1011, such as a magnetic disk, an optical disk, a magneto-optical disk, or a semiconductor memory, etc., is installed in the storage unit 1008, and is loaded from the storage unit 1008 to the RAM 1003. The RAM 1003 also stores data which is required when the CPU 1001 executes various processes, etc., as appropriate.

In the computer configured as described above, the CPU 1001 loads a program that is stored, for example, in the storage unit 1008 onto the RAM 1003 via the input/output interface 1005 and the bus 1004, and executes the program. Thus, the above-described series of processing is performed.

Programs to be executed by the computer (the CPU 1001) are provided being recorded in the removable medium 1011 which is a packaged medium or the like. Also, programs may be provided via a wired or wireless transmission medium, such as a local area network, the Internet or digital satellite broadcasting.

In the computer, by inserting the removable medium 1011 into the drive 1010, the program can be installed in the storage unit 1008 via the input/output interface 1005. Further, the program can be received by the communication unit 1009 via a wired or wireless transmission medium and installed in the storage unit 1008. Moreover, the program can be installed in advance in the ROM 1002 or the storage unit 1008.

It should be noted that the program executed by a computer may be a program that is processed in time series according to the sequence described in this specification or a program that is processed in parallel or at necessary timing such as upon calling.

Further, in the present disclosure, a system has the meaning of a set of a plurality of configured elements (such as an apparatus or a module (part)), and does not take into account whether or not all the configured elements are in the same casing. Therefore, the system may be either a plurality of apparatuses, stored in separate casings and connected through a network, or a plurality of modules within a single casing.

An embodiment of the disclosure is not limited to the embodiments described above, and various changes and modifications may be made without departing from the scope of the disclosure.

For example, the present disclosure can adopt a configuration of cloud computing which processes by allocating and connecting one function by a plurality of apparatuses through a network.

Further, each step described by the above-mentioned flow charts can be executed by one apparatus or by allocating a plurality of apparatuses.

In addition, in the case where a plurality of processes are included in one step, the plurality of processes included in this one step can be executed by one apparatus or by sharing a plurality of apparatuses.

Additionally, the present technology may also be configured as below.
(1)
   An image processing device including:
   an eye-gaze direction detection unit configured to detect an eye-gaze direction of a user toward an image;
   an estimation unit configured to estimate a gaze area in the image on the basis of the eye-gaze direction and the image, the eye-gaze direction being detected by the eye-gaze direction detection unit;
   a chased object detection unit configured to detect a chased object being eye-chased by the user in the image, on the basis of the time-series gaze areas estimated by the estimation unit;
   a tracking unit configured to search for and track the chased object detected by the chased object detection unit; and
   an image control unit configured to control an image of the chased object tracked by the tracking unit.
(2)
   The image processing device according to (1),
   wherein the chased object detection unit detects a face image as the chased object being eye-chased by the user in the image, on the basis of the time-series gaze areas estimated by the estimation unit.
(3)
   The image processing device according to (1) or (2),
   wherein the chased object detection unit detects a specific object as the chased object being eye-chased by the user in the image, on the basis of the time-series gaze areas estimated by the estimation unit.
(4)
   The image processing device according to any one of (1) to (3), wherein the image processing device is an eyeglass-type imaging device, further including:
   an imaging unit configured to image an image of a field of view that the user can view when wearing the eyeglass-type imaging device,
   wherein the eye-gaze direction detection unit detects an eye-gaze direction of the user toward the image of the field of view that the user can view when wearing the eyeglass-type imaging device, and
   wherein the image control unit performs control in a manner that the imaging unit optimally images the image of the chased object being tracked by the tracking unit.
(5)
   The image processing device according to any one of (1) to (3), wherein the image processing device is an imaging device handheld and used by the user for imaging, further including:
   an imaging unit configured to image the image; and
   a viewfinder through which the image imaged by the imaging unit is looked at,
   wherein the eye-gaze direction detection unit detects an eye-gaze direction of the user looking through the viewfinder toward the image imaged by the imaging unit, and
   wherein the image control unit performs control in a manner that the imaging unit optimally images the image of the chased object being tracked by the tracking unit.
(6)
   The image processing device according to (1), further including:
   a reproducing unit configured to reproduce an image; and
   an image processing unit configured to perform processing on the image reproduced by the reproducing unit, and to cause a display unit to display the reproduced image,
   wherein the eye-gaze direction detection unit detects an eye-gaze direction of the user viewing the image displayed on the display unit, and
   wherein the image processing unit performs processing on the image reproduced by the reproducing unit and causes the display unit to display the image in a manner that the image of the chased object being tracked by the tracking unit is optimally displayed.
(7)
   The image processing device according to (6),
   wherein the eye-gaze direction detection unit is the eyeglass-type device, and detects an eye-gaze direction of the user toward an image of a field of view in which the user can view the display unit when wearing the eyeglass-type imaging device.
(8)
   An image processing method including the steps of:
   performing eye-gaze direction detection processing of detecting an eye-gaze direction of a user toward an image;
   performing estimation processing of estimating a gaze area in the image on the basis of the eye-gaze direction, and the image, the eye-gaze direction being detected by the eye-gaze direction detection processing;
   performing chased object detection processing of detecting a chased object being eye-chased by the user in the image, on the basis of the time-series gaze areas estimated by the estimation processing;
   performing tracking processing of searching for and tracking the chased object detected by the chased object detection processing; and
   performing image control processing of controlling an image of the chased object tracked by the tracking processing.
(9)
   A program for causing a computer to perform processing, the processing including:
   an eye-gaze direction detection step of detecting an eye-gaze direction of a user toward an image;
   an estimation step of estimating a gaze area in the image on the basis of the eye-gaze direction and the image, the eye-gaze direction being detected by processing the eye-gaze direction detection step;
   a chased object detection step of detecting a chased object being eye-chased by the user in the image, on the basis of the time-series gaze areas estimated by processing the estimation step;
   a tracking step of searching for and tracking the chased object detected by processing the chased object detection step; and
   an image control step of controlling an image of the chased object tracked by processing the tracking step.

### Reference Signs List

- 11: imaging device
- 31, 31-1, 31-2: see-through display
- 32, 32-1, 32-2: eye-gaze detection unit
- 33: control unit
- 34: imaging mechanism unit
- 51: eye-gaze recognition section
- 52: gaze area estimation section
- 53: attention area specification section
- 54: control target detection section
- 55: control target tracking section
- 56: optical system block control section
- 57: frame display control section
- 58: storage section
- 61: eye-gaze movement time-series pattern analysis part
- 71: optical system block
- 72: imaging section
- 201: eyeglass-type eye-gaze detection device
- 202: reproducing device
- 203: display unit
- 231, 231-1, 231-2: see-through display
- 232, 232-1, 232-2: eye-gaze detection unit
- 233: control unit
- 234: imaging mechanism unit
- 251: display position detection section
- 252: communication section
- 271: storage section
- 272: reproducing section
- 273: image processing section
- 274: communication section

## Claims

1. An image processing device comprising:
an eye-gaze direction detection unit configured to detect an eye-gaze direction of a user toward an image;
an estimation unit configured to estimate a gaze area in the image on the basis of the eye-gaze direction and the image, the eye-gaze direction being detected by the eye-gaze direction detection unit;
a chased object detection unit configured to detect a chased object being eye-chased by the user in the image, on the basis of the time-series gaze areas estimated by the estimation unit;
a tracking unit configured to search for and track the chased object detected by the chased object detection unit; and
an image control unit configured to control an image of the chased object tracked by the tracking unit.

2. The image processing device according to claim 1,
wherein the chased object detection unit detects a face image as the chased object being eye-chased by the user in the image, on the basis of the time-series gaze areas estimated by the estimation unit.

3. The image processing device according to claim 1,
wherein the chased object detection unit detects a specific object as the chased object being eye-chased by the user in the image, on the basis of the time-series gaze areas estimated by the estimation unit.

4. The image processing device according to claim 1, wherein the image processing device is an eyeglass-type imaging device, further comprising:
an imaging unit configured to image an image of a field of view that the user can view when wearing the eyeglass-type imaging device,
wherein the eye-gaze direction detection unit detects an eye-gaze direction of the user toward the image of the field of view that the user can view when wearing the eyeglass-type imaging device, and
wherein the image control unit performs control in a manner that the imaging unit optimally images the image of the chased object being tracked by the tracking unit.

5. The image processing device according to claim 1, wherein the image processing device is an imaging device handheld and used by the user for imaging, further comprising:
an imaging unit configured to image the image; and
a viewfinder through which the image imaged by the imaging unit is looked at,
wherein the eye-gaze direction detection unit detects an eye-gaze direction of the user looking through the viewfinder toward the image imaged by the imaging unit, and
wherein the image control unit performs control in a manner that the imaging unit optimally images the image of the chased object being tracked by the tracking unit.

6. The image processing device according to claim 1, further comprising:
a reproducing unit configured to reproduce an image; and
an image processing unit configured to perform processing on the image reproduced by the reproducing unit, and to cause a display unit to display the reproduced image,
wherein the eye-gaze direction detection unit detects an eye-gaze direction of the user viewing the image displayed on the display unit, and
wherein the image processing unit performs processing on the image reproduced by the reproducing unit and causes the display unit to display the image in a manner that the image of the chased object being tracked by the tracking unit is optimally displayed.

7. The image processing device according to claim 6,
wherein the eye-gaze direction detection unit is the eyeglass-type device, and detects an eye-gaze direction of the user toward an image of a field of view in which the user can view the display unit when wearing the eyeglass-type imaging device.

8. An image processing method comprising the steps of:
performing eye-gaze direction detection processing of detecting an eye-gaze direction of a user toward an image;
performing estimation processing of estimating a gaze area in the image on the basis of the eye-gaze direction, and the image, the eye-gaze direction being detected by the eye-gaze direction detection processing;
performing chased object detection processing of detecting a chased object being eye-chased by the user in the image, on the basis of the time-series gaze areas estimated by the estimation processing;
performing tracking processing of searching for and tracking the chased object detected by the chased object detection processing; and
performing image control processing of controlling an image of the chased object tracked by the tracking processing.

9. A program for causing a computer to perform processing, the processing comprising:
an eye-gaze direction detection step of detecting an eye-gaze direction of a user toward an image;
an estimation step of estimating a gaze area in the image on the basis of the eye-gaze direction and the image, the eye-gaze direction being detected by processing the eye-gaze direction detection step;
a chased object detection step of detecting a chased object being eye-chased by the user in the image, on the basis of the time-series gaze areas estimated by processing the estimation step;
a tracking step of searching for and tracking the chased object detected by processing the chased object detection step; and
an image control step of controlling an image of the chased object tracked by processing the tracking step.
